(19)

Europäisches
Patentamt
European
Patent Office
Office européen
des brevets

(11) **EP 4 191 698 A1**

(12) **EUROPEAN PATENT APPLICATION**
published in accordance with Art. 153(4) EPC

(43) Date of publication:
**07.06.2023 Bulletin 2023/23**

(21) Application number: **21872986.1**

(22) Date of filing: **27.09.2021**

(51) International Patent Classification (IPC):
**H01M 4/13** (2010.01)      **H01M 4/62** (2006.01)
**H01M 10/052** (2010.01)      **H01M 4/02** (2006.01)

(52) Cooperative Patent Classification (CPC):
**H01M 4/02; H01M 4/13; H01M 4/62; H01M 10/052;**
Y02E 60/10

(86) International application number:
**PCT/KR2021/013154**

(87) International publication number:
**WO 2022/065958 (31.03.2022 Gazette 2022/13)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.09.2020 KR 20200125978**

(71) Applicant: **LG Energy Solution, Ltd.**
**Seoul 07335 (KR)**

(72) Inventors:
• **LEE, Geun Sung**
  **Daejeon 34122 (KR)**
• **LEE, Il Ha**
  **Daejeon 34122 (KR)**
• **SONG, In Taek**
  **Daejeon 34122 (KR)**
• **PARK, Jin Woo**
  **Daejeon 34122 (KR)**
• **KIM, Ki Hwan**
  **Daejeon 34122 (KR)**
• **LEE, Ho Chan**
  **Daejeon 34122 (KR)**

(74) Representative: **Plasseraud IP**
**66, rue de la Chaussée d'Antin**
**75440 Paris Cedex 09 (FR)**

(54)    **ELECTRODE**

(57)    The present application relates to an electrode, an electrochemical element, and a secondary battery. The present application relates to an electrode comprising a current collector and an active material layer, which can provide an electrode capable of ensuring adhesion force between particles, and adhesion force between the active material layer and the current collector in high levels compared with a binder content in the active material layer. The present application can also provide an electrochemical element and a secondary battery comprising the electrode.

[Figure 5]

2.0kV 9.2mm x500          100um

EP 4 191 698 A1

## Description

### Technical Field

The present application relates to an electrode.

### Background Art

The application area of energy storage technology is enlarged to mobile phones, camcorders, notebook PCs, or electric vehicles, and the like.

One of the research fields of energy storage technology is a secondary battery capable of charging and discharging, and research and development for improving the capacity density and specific energy of such a secondary battery is in progress.

An electrode (positive electrode or negative electrode) applied to a secondary battery is usually manufactured by forming an active material layer comprising an electrode active material and a binder on a current collector.

In order to smoothly induce movement of electrons between the active materials and electron movement between the current collector and the active material layer in the electrode of the secondary battery, the adhesion force between the active material particles and the adhesion force between the active material layer and the current collector must be secured.

In addition, when the adhesion force between the particles in the active material layer is insufficient, a phenomenon in which the particles fall off from the electrode may occur, where such a phenomenon deteriorates the stability and performance of the battery. For example, particles falling off due to insufficient adhesion force between particles from the surfaces of the negative electrode and the positive electrode may cause a microshort or the like inside the battery, which may cause deterioration of performance and fire due to a short circuit.

When the adhesion force between the active material layer and the current collector is lowered, the movement speed of electrons between the active material layer and the current collector decreases, which may cause deterioration of the speed characteristics and cycle characteristics.

The adhesion force between the particles in the active material layer or the adhesion force between the active material layer and the current collector is secured by a binder.

Therefore, if a larger amount of binder is introduced into the active material layer, higher adhesion force may be secured.

However, in this case, the ratio of the active material decreases as the ratio of the binder increases, so that there is a problem of deterioration of the battery performance due to an increase in electrode resistance, a decrease in conductivity, and the like.

### Disclosure

### Technical Problem

The present application relates to an electrode. It is one object of the present application to provide an electrode comprising a current collector and an active material layer, which can secure a high level of inter-particle adhesion force and adhesion force between the active material layer and the current collector compared to the binder content in the active material layer.

### Technical Solution

Among the physical properties mentioned in this specification, the physical properties in which the measurement temperature affects the results are results measured at room temperature unless otherwise specified.

The term room temperature is a natural temperature without warming and cooling, which means, for example, any temperature within a range of 10°C to 30°C, or a temperature of about 23°C or about 25°C or so. In addition, in this specification, the unit of temperature is Celsius (°C), unless otherwise specified.

Among the physical properties mentioned in this specification, the physical properties in which the measurement pressure affects the results are results measured at normal pressure, unless otherwise specified.

The term normal pressure is a natural pressure without pressurization or depressurization, which usually means about 1 atm or so in a level of atmospheric pressure.

In the case of a physical property in which the measurement humidity affects the results, the relevant physical property is a physical property measured at natural humidity that is not specifically controlled at the room temperature and/or normal pressure state.

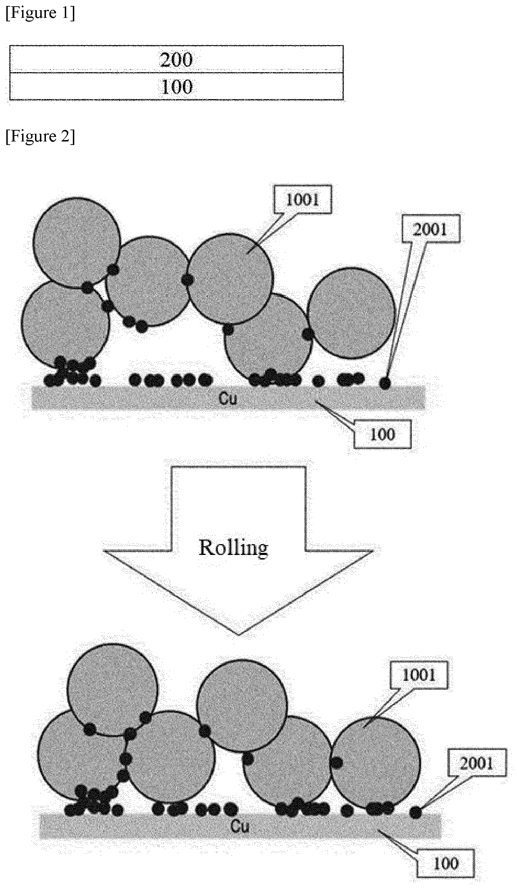

The electrode of the present application comprises: a current collector; and an active material layer present on one side of the current collector. Figure 1 is a cross-sectional diagram of such an electrode, and shows a structure comprising a current collector (100) and an active material layer (200). In the electrode structure, the active material layer may be formed in contact with the surface of the current collector, or another layer may exist between the current collector and the active material layer.

Through control of the distribution of the binder in the active material layer, particularly the distribution of the binder in the active material layer adjacent to the current collector as well as through use of a relatively small amount of binder, the present application may secure high adhesion force between the particles in the active material layer and/or high adhesion force between the current collector and the current collector. The active material layer basically comprises an electrode active material and a binder, where the adhesion force is expressed by the binder. Therefore, the prior art approach for securing the adhesion force has been to place the binder as much as possible at positions where the expression of the adhesion force is required. For example, a technique for improving wetting properties of the binder to the current collector by increasing the affinity of the binder with the current collector is representative. However, in this approach, there is a limit to improving the adhesion force between the active material layer and the current collector.

As conceptually shown in Figure 2, the electrode active material (1001) and the binder (2001) present in the active material layer are typically particulate materials, and the electrode active material (1001) has a large particle diameter relative to the binder (2001). If the binder (2001) is evenly distributed on the current collector (100) in this state, the probability that the binder (2001) on the current collector (100) and the electrode active material (1001) will contact may be reduced. That is, among the binders distributed on the current collector, the proportion of the binder that does not contribute to the improvement of the adhesion force increases.

In the present application, it has been confirmed that through a method of forming a region in which the binder is relatively concentrated on the surface of the current collector or a method of forming a region in which the binder is not distributed or is distributed relatively little on the surface of the current collector, or a method of forming both of the two types of regions, the adhesion force between the particles in the active material layer and/or the adhesion force between the active material layer and the current collector can be greatly improved. Here, the portion in which the binder is relatively concentrated may be referred to as a network region, and the region in which the binder is not distributed or is distributed relatively little may be referred to as a blank region.

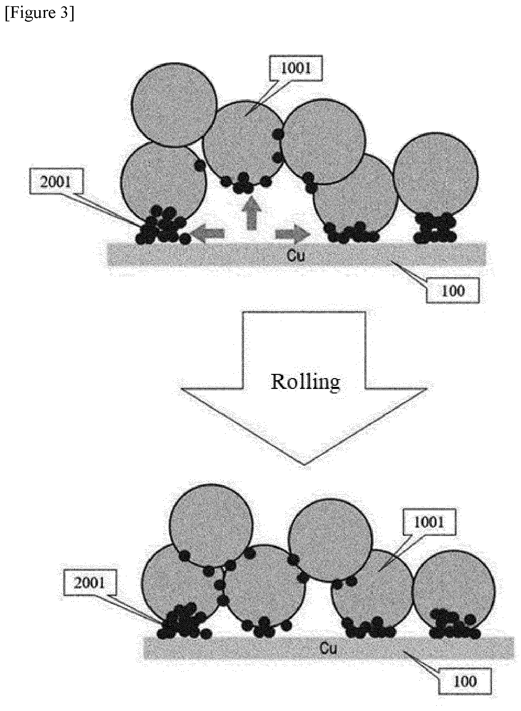

For example, as conceptually shown in Figure 3, by forming the network region and/or the blank region on the current collector, it is possible to increase the probability that particles of the electrode active material (1001) located relatively far from the current collector (100), and the like come into contact with the binder. In addition, by forming the blank region, it is also possible to increase the probability that the binder (2001) is subjected to migration to the upper part to an appropriate level, so that the binder (2001) may also be positioned in a large amount at the interface between the particles in the active material layer. Furthermore, by forming the network region and/or the blank region, it is possible to appropriately control the spread of the binder during the rolling process, thereby securing further improved adhesion force.

Accordingly, the present application can provide an electrode securing excellent adhesion force while maintaining a high content of the electrode active material in the active material layer using a small amount of binder.

In the present application, the term network region is a region identified on the surface of the current collector after a standard peel test, which may mean a region comprising at least a binder and having a height of a certain level or more. The network region comprises at least a binder, which may also comprise other additional components (e.g., a thickener included in the slurry, etc.).

For example, when the binder is a particulate binder, the network region may be a region having a height of three or more times the average particle diameter of the binder. That is, if the average particle diameter of the binder is D, the network region may have a height of 3D or more. The height of the network region may be further adjusted and defined within a range of 4 times or more, 5 times or more, 6 times or more, 7 times or more, 8 times or more, 9 times or more, 10 times or more, 11 times or more, 12 times or more, 13 times or more, or 14 times or more and/or within a range of 50 times or less, 45 times or less, 40 times or less, 35 times or less, 30 times or less, 25 times or less, 20 times or less, or 15 times or less, relative to the average particle diameter of the binder.

In another example, the height of the network region may be in the range of about 1.4 $\mu$m or more, 1.6 $\mu$m or more, 1.8 $\mu$m or more, 2 $\mu$m or more, or 2.1 $\mu$m or more. The height of the network region may also further be 10 $\mu$m or less, 9 $\mu$m or less, 8 $\mu$m or less, 7 $\mu$m or less, 6 $\mu$m or less, 5 $\mu$m or less, 4 $\mu$m or less, 3 $\mu$m or less, 2.5 $\mu$m or less, 2 $\mu$m or less, or 1.8 $\mu$m or less or so.

The height of the network region is a height confirmed by a method presented in an example using a confocal laser spectro microscope. In addition, the height of the network region is an arithmetic mean height of a plurality of network regions present on the current collector.

In addition, here, the average particle diameter of the particulate binder is a so-called D50 particle diameter or median diameter obtained by a laser diffraction method, and the method of obtaining this particle diameter is described in Examples.

In this specification, the term blank region is a region that does not comprise the particulate binder, or means a region whose height is 1.5 times or less the average particle diameter of the particulate binder even if it comprises the binder. The method of measuring the height is the same as the method of measuring the network region. In addition, the height in the blank region may also be 1.3 times or less, 1.1 times or less, 0.9 times or less, 0.7 times or less, 0.5 times or less, 0.3 times or less, or 0.1 times or less or so the average particle diameter of the particulate binder.

The network region and the blank region can be confirmed through an FE-SEM (field emission scanning electron microscope) image taken with respect to the current collector surface after a standard peel test to be described below, where a specific confirmation method is described in Examples.

The network region and/or the blank region can be confirmed on the surface of the current collector after a standard peel test. The standard peel test is a test for peeling the active material layer from the electrode, and is a test performed according to the method described below.

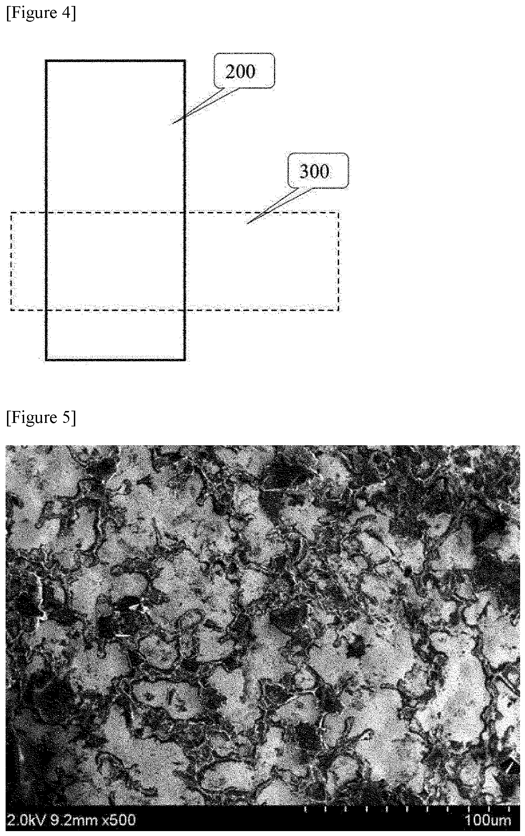

The standard peel test is performed using 3M's Scotch Magic tape Cat. 810R. In order to perform the standard peel test, first, the electrode is cut to a size of 20 mm or so in width and 100 mm or so in length. The Scotch Magic tape Cat. 810R is also cut so that the horizontal length is 10 mm and the vertical length is 60 mm. Thereafter, as shown in Figure 4, the Scotch Magic tape Cat. 810R (300) is attached on the active material layer (200) of the electrode in a cross state. In the attachment, the standard peel test may be performed so that a certain portion of the Magic tape Cat. 810R (300) protrudes. Then, the protruding portion is hold, and the magic tape Cat. 810R (300) is peeled off. At this time, the peel rate and the peel angle are not particularly limited, but the peel rate may be about 20mm/sec or so, and the peel angle may be about 30 degrees or so. In addition, regarding the attachment of the Scotch Magic tape Cat. 810R (300), it is attached by reciprocating and pushing the surface of the tape with a roller having a weight of 1kg or so, and a radius and width of 50mm and 40mm, respectively, once after attaching the tape.

Through the above process, when the Scotch Magic tape Cat. 810R (300) is peeled off, the component of the active material layer (200) is peeled off together with the Scotch Magic tape Cat. 810R (300). Subsequently, the above process is repeated using the new Scotch Magic tape Cat. 810R (300).

The standard peel test may be performed by performing this process until the components of the active material layer (200) do not come off on the Scotch Magic tape Cat. 810R (300) and thus are not observed.

Regarding the matter that no component of the active material layer (200) comes off on the Scotch Magic tape Cat. 810R (300), when the surface of the Scotch Magic tape peeled from the active material layer is compared with the surface of the unused Scotch Magic tape so that the tones of both are substantially the same, it may be determined that the component of the active material layer does not come off (visual observation).

A specific way to run the standard peel test is described in Examples.

For increasing the contact probability of the binder with components such as electrode active material particles forming the active material layer in the electrode manufacturing process, controlling the migration of the binder, and achieving the suitable spread of the binder in the rolling process, it is possible to control the ratio of the network region and/or the blank region on the current collector.

For example, the ratio ($100 \times A2/A1$) of the occupied area (A2) of the network region based on the total area (A1) of the current collector surface may be 60% or less. In another example, the ratio may be 58% or less, 56% or less, 54% or less, 52% or less, 50% or less, 48% or less, 46% or less, 44% or less, 42% or less, 40% or less, 38% or less, or 36% or less, or may also be 10% or more, 12% or more, 14% or more, 16% or more, 18% or more, 20% or more, 22% or more, 24% or more, 26% or more, 28% or more, 30% or more, 32 % or more, 34% or more, 36% or more, 38% or more, 40% or more, 42% or more, 44% or more, or 46% or more or so.

In another example, the occupied area of the network region may satisfy Equation 1 below based on the total area of the current collector surface.

[Equation 1]

$$A/W \leq 30$$

In Equation 1, A is the ratio of the occupied area of the network region to the total area of the current collector surface, and W is the content of the binder in the active material layer.

In Equation 1, the unit of A is %, and the unit of W is weight%. Therefore, the unit of A/W in Equation 1 is $wt^{-1}$.

When the composition of the slurry in the electrode manufacturing process is known, the content of the binder is substantially the same as the content ratio of the binder in the solid content (part excluding the solvent) of the relevant slurry. In addition, when the composition of the slurry in the electrode manufacturing process is not known, the content of the binder may be confirmed through TGA (thermogravimetric analysis) analysis of the active material. For example, when an SBR (styrene-butadiene rubber) binder is applied as the binder, the content of the binder may be confirmed through the content of the SBR binder obtained from the 370°C to 440°C decrease in the temperature-mass curve obtained by performing the TGA analysis of the active material layer, and increasing the temperature at a rate of 10°C per minute.

In Equation 1, in another example, A/W may be in the range of 28 or less, 26 or less, 24 or less, 22 or less, 20 or less, or 18 or less, and/or may be in the range of 5 or more, 7 or more, 9 or more, 11 or more, 13 or less, 15 or more, 17 or more, 19 or more, 21 or more, or 23 or more.

In another example, the ratio ($100 \times A3/A1$) of the occupied area (A3) of the blank region based on the total area (A1) of the current collector surface may be 40% or more. In another example, the ratio may be 42% or more, 44% or more, 46% or more, 48% or more, 50% or more, 52% or more, 54% or more, 56% or more, 58% or more, 60% or more, 62% or more, or 64% or more, or may be 80% or less, 78% or less, 76% or less, 74% or less, 72% or less, 70% or less, 68% or less, 66% or less, 64% or less, 62% or less, 60% or less, 58 % or less, 56% or less, or 54% or less.

The matter of controlling the occupied areas of the network region and/or the blank region as described above is different from the concept of the prior art intended to secure adhesion force by improving the wetting properties of the binder to the current collector. In the present application, by controlling the area occupied on the current collector of the network region and/or the blank region as described above, it is possible to control the ratio of the network region and/or the blank region on the current collector for increasing the contact probability of the binder with components such as electrode active material particles forming the active material layer in the electrode manufacturing process, and controlling the migration of the binder, and achieving a suitable spread of the binder during the rolling process.

The type of the current collector applied in the present application is not particularly limited, where a known current collector may be used. In order to implement the above-described network region and/or blank region, the surface characteristics (water contact angle, etc.) of the current collector may be controlled, as described below. As the current collector, for example, a film, sheet, or foil made of stainless steel, aluminum, nickel, titanium, baked carbon, copper, carbon, stainless steel surface-treated with nickel, titanium or silver, an aluminum-cadmium alloy, and the like may be used. In order to realize the desired network region and/or blank region, one having surface characteristics to be described below may be selected from the current collectors, or the surface characteristics may be adjusted by additional treatment.

The thickness and shape of the current collector, and the like are not particularly limited, and an appropriate type is selected within a known range.

The active material layer formed on the current collector basically comprises an electrode active material and a binder.

A known material may be used as the binder, and components known to contribute to bonding of components such as the active material in the active material layer and bonding of the active material layer and the current collector may be used. As the applicable binder, one, or a combination of two or more selected from PVDF (poly(vinylidene fluoride)), PVA (poly(vinyl alcohol)), polyvinylpyrrolidone, tetrafluoroethylene, polyethylene, polypropylene, an ethylene-propylene-diene terpolymer (EPDM), a sulfonated EPDM, SBR (Styrene-Butadiene rubber), fluororubber, and other known binders may be used.

For the formation of the suitable network region and/or blank region, it is appropriate to use a particulate binder as the binder, and for example, it is appropriate to use a particulate binder with an average particle diameter of about 50 to 500 nm or so. At this time, the meaning of the average particle diameter is the same as described above. In another example, the average particle diameter of the particulate binder may be 70 nm or more, 90 nm or more, 110 nm or more, 130 nm or more, or 140 nm or more, or may also be 450 nm or less, 400 nm or less, 350 nm or less, 300 nm or less, 250 nm or less, or 200 nm or less or so.

In one example, when two types of particulate binders having different average particle diameters exist in the active material layer, the average particle diameter in consideration of the weight fraction of the two types of particulate binders may be defined, in this specification, as the average particle diameter of the particulate binders. For example, when the particulate binder having an average particle diameter of D1 is present in a weight of W1, and the particulate binder having an average particle diameter of D2 is present in a weight of W2, the average particle diameter D may be defined as $D=(D1 \times W1+D2 \times W2)/(W1+W2)$. Upon the above confirmation, the particle diameters D1 and D2, and the weights W1 and W2 are values of the same unit as each other, respectively.

In addition, for formation of the suitable network region, it may be advantageous to use a binder having a solubility parameter in a range to be described below as the binder.

In the present application, it is possible to secure a high level of adhesion force while taking a relatively small ratio of the binder in the active material layer. For example, the ratio of the binder in the active material layer may be about 0.5 to 10 weight% or so. In another example, the ratio may also be further controlled in the range of 1 weight% or more, 1.5 weight% or more, 2 weight% or more, 2.5 weight% or more, 3 weight% or more, 3.5 weight% or more, or 4 weight% or more or so and/or in the range of 9.5 weight% or less, 9 weight% or less, 8.5 weight% or less, 8 weight% or less, 7.5 weight% or less, 7 weight% or less, 6.5 weight% or less, 6 weight% or less, 5.5 weight% or less, 5 weight% or less, 4.5 weight% or less, 4 weight% or less, 3.5 weight% or less, 3 weight% or less, or 2 weight% or less or so. The method of confirming the ratio (content) of the binder is as described above.

The electrode active material included in the active material layer may be a positive active material or a negative active material, and the specific type is not particularly limited. For example, as the positive electrode active material, active materials including $LiCoO_2$, $LiNiO_2$, $LiMn_2O_4$, $LiCoPO_4$, $LiFePO_4$, $LiNiMnCoO_2$ and $LiNi_{1-x-yz}Co_xM1_yM2_zO_2$ (M1 and M2 are each independently any one selected from the group consisting of Al, Ni, Co, Fe, Mn, V, Cr, Ti, W, Ta, Mg, and Mo, and x, y and z are each independently an atomic fraction of oxide composition elements, satisfying $0 \leq x < 0.5$, $0 \leq y < 0.5$, $0 \leq z < 0.5$, $0 < x+y+z \leq 1$), and the like may be used, and as the negative active material, active materials including natural graphite, artificial graphite, carbonaceous materials; lithium-containing titanium composite oxides (LTO), Si, Sn, Li, Zn, Mg, Cd, Ce, Ni or Fe metals (Me); alloys composed of the metals (Me); oxides (MeOx) of the metals (Me); and composites of the metals (Me) with carbon, and the like may be used.

For the formation of the suitable network region, it is appropriate to use a particulate active material as the electrode active material, and for example, it is appropriate to use one having an average particle diameter of 1 to 100 μm or so. At this time, the meaning of the average particle diameter is the same as described above. In another example, the average particle diameter of the particulate active material may also be 5 μm or more, 10 μm or more, or 15 μm or more, or may also be 90 μm or less, 80 μm or less, 70 μm or less, 60 μm or less, 50 μm or less, 40 μm or less, 30 μm or less, 25 μm or less, 20 μm or less, or 15 μm or less or so.

In one example, when two types of particulate active materials having different average particle diameters exist in the active material layer, the average particle diameter in consideration of the weight fraction of the two types of particulate active materials may be defined, in this specification, as the average particle diameter of the particulate active materials. For example, when the particulate active material having an average particle diameter of D1 is present in a weight of W1, and the particulate active material having an average particle diameter of D2 is present in a weight of W2, the average particle diameter D may be defined as $D=(D1 \times W1+D2 \times W2)/(W1+W2)$. Upon the above confirmation, the particle diameters D1 and D2, and the weights W1 and W2 are values of the same unit as each other, respectively.

For the formation of the appropriate network region and blank region, the particle diameter relation between the particulate binder and the active material may be adjusted. For example, the ratio (D1/D2) of the average particle diameter (D1, unit nm) of the particulate electrode active material to the average particle diameter (D2, unit nm) of the particulate binder may be in the range of 10 to 1,000. In another example, the ratio (D1/D2) may be 20 or more, 30 or more, 40 or more, 50 or more, 60 or more, 70 or more, 80 or more, 90 or more, 100 or more, 110 or more, 120 or more, or 130 or more, or may be 900 or less, 800 or less, 700 or less, 600 or less, 500 or less, 400 or less, 300 or less, 200 or less, or 150 or less or so.

For the rolled active material layer, the average particle diameter of the particulate binder and the active material mentioned in this specification means, in the case of a rolled electrode active material layer, the average particle diameter before rolling.

In the present application, it is possible to secure excellent adhesion force while maintaining a relatively high ratio of the active material in the active material layer.

For example, the active material in the active material layer may be in the range of 1000 to 10000 parts by weight relative to 100 parts by weight of the binder. In another example, the ratio may be 1500 parts by weight or more, 2000 parts by weight or more, 2500 parts by weight or more, 3000 parts by weight or more, 3500 parts by weight or more, 4000 parts by weight or more, or 4500 parts by weight or more, or may also be 9500 parts by weight or less, 9000 parts by weight or less, 8500 parts by weight or less, 8000 parts by weight or less, 7500 parts by weight or less, 7000 parts by weight or less, 6500 parts by weight or less, 6000 parts by weight or less, 5500 parts by weight or less, 5000 parts by weight or less, 4500 parts by weight or less, 4000 parts by weight or less, 3500 parts by weight or less, 3000 parts by weight or less, or about 2500 parts by weight or less or so.

The active material layer may also further comprise other necessary components in addition to the above components. For example, the active material layer may further comprise a conductive material. As the conductive material, for example, a known component may be used without any particular limitation, as long as it exhibits conductivity without causing chemical changes in the current collector and the electrode active material. For example, as the conductive material, one or a mixture of two or more selected from graphite such as natural graphite or artificial graphite; carbon black such as carbon black, acetylene black, ketjen black, channel black, furnace black, lamp black, or summer black; a conductive fiber such carbon fiber or metal fiber; a carbon fluoride powder; a metal powder such as an aluminum powder, or a nickel powder; a conductive whisker such as zinc oxide or potassium titanate; a conductive metal oxide such as titanium oxide; a polyphenylene derivative, and the like may be used.

The content of the conductive material is controlled as necessary, without being particularly limited, but it may be usually included in an appropriate ratio within the range of 0.1 to 20 parts by weight or 0.3 to 12 parts by weight relative to 100 parts by weight of the active material. A method of determining the content of the conductive material to an appropriate level in consideration of the cycle life of the battery, and the like is known.

The active material layer may also comprise other necessary known components (e.g., thickeners such as carboxymethyl cellulose (CMC), starch, hydroxypropyl cellulose or regenerated cellulose, etc.) in addition to the above components.

The thickness of the active material layer is not particularly limited, which may be controlled to have an appropriate level of thickness in consideration of desired performance.

For example, the thickness of the active material layer may be in a range of about 10 $\mu$m to 500 $\mu$m. In another example, the thickness may be about 30 $\mu$m or more, 50 $\mu$m or more, 70 $\mu$m or more, 90 $\mu$m or more, or 100 $\mu$m or more or so, or may also be about 450 $\mu$m or less, 400 $\mu$m or less, 350 $\mu$m or less, 300 $\mu$m or less, 250 $\mu$m or less, 200 $\mu$m or less, or 150 $\mu$m or less or so.

The active material layer may be formed to have a certain level of porosity. The porosity is usually controlled by rolling during the manufacturing process of the electrode. The active material layer may have a porosity of about 35% or less or so. The porosity may also be further adjusted in the range of 33% or less, 31% or less, 29% or less, or 27% or less and/or in the range of 5% or more, 7% or more, 9% or more, 11% or more, 13% or more, 15% or more, 17% or more, 19% or more, 21% or more, 23% or more, or 25% or more. The rolling process controlled to have the porosity may contribute to the formation of the desired network region and/or blank region in the present application, as described below. Here, a method of obtaining the porosity is known. For example, the porosity of the rolled active material layer may be calculated by comparing the ratio of the difference between the real density of the active layer and the density after rolling.

The above-described electrode may be manufactured in the manner to be described below. In general, the electrode is manufactured by coating the slurry on the current collector, drying it, and then performing a rolling process. In the present application, by controlling the compositions of the slurry, the surface characteristics of the current collector on which the slurry is coated, drying conditions and/or rolling conditions in the above process, it is possible to form the desired network region and/or blank region.

For example, in the manufacturing process of the present application, as a slurry, one that a relatively hydrophobic binder (suitably a particulate binder having a specific average particle diameter while having relative hydrophobicity) is dispersed in a certain amount in a relatively polar solvent may be applied. Such a slurry is coated on a current collector whose surface characteristics are controlled, as described below. The reason is not clear, but when such a slurry is coated on the current collector, it is expected that the dispersion state of the binder in the slurry, the affinity of the solvent of the slurry with the current collector surface and/or the affinity of the current collector surface with the binder in the slurry, and the like are mutually combined with each other to form a blank region and/or a network region of the desired shape.

For example, the affinity of the solvent with the current collector surface affects the contact angle of the solvent on the current collector surface, where the contact angle may form a force in a certain direction in the slurry due to capillary action or the like upon evaporation of the solvent. The affinity of the binder with the solvent and the amount of the binder (also, the particle diameter in the case of the particulate binder) affect the dispersion state of the binder in the slurry, and the affinity of the binder with the current collector surface affects the dispersion state of the binder in the slurry, or the binder distribution shape into the current collector surface, and the like.

In the present application, it has been confirmed that the desired level of network region and/or blank region is formed through the dispersion state of the binder and the evaporation aspect of the solvent when the slurry of the compositions to be described below has been formed on the current collector having the surface characteristics to be described below, and the shear force in the slurry generated thereby.

For example, the slurry applied to the manufacturing process may comprise a solvent. As the solvent, one capable of properly dispersing the slurry components such as the electrode active material is usually applied, and an example thereof is exemplified by water, methanol, ethanol, isopropyl alcohol, acetone, dimethyl sulfoxide, formamide and/or dimethylformamide, and the like.

In the present application, it may be necessary to use a solvent having a dipole moment of approximately 1.3D or more in the solvents. In another example, the dipole moment of the solvent may be further controlled in the range of about 1.35 D or more, 1.4 D or more, 1.45 D or more, 1.5 D or more, 1.55 D or more, 1.6 D or more, 1.65 D or more, 1.7 D or more, 1.75 D or more, 1.8 D or more, or 1.85 D or more or so and/or in the range of 5 D or less, 4.5 D or less, 4 D or less, 3.5 D or less, 3 D or less, 2.5 D or less, 2 D or less, or 1.9 D or less or so. The dipole moments of solvents are known for each solvent.

As the binder included in the slurry, an appropriate one of the above-described types of binders may be selected and used. In order to achieve the desired dispersion state in the solvent, it may be necessary to use a binder having a solubility parameter of about 10 to 30 MPa$^{1/2}$ or so as the binder. In another example, the solubility parameter may be 11 MPa$^{1/2}$ or more, 12 MPa$^{1/2}$ or more, 13 MPa$^{1/2}$ or more, 14 MPa$^{1/2}$ or more, 15 MPa$^{1/2}$ or more, or 16 MPa$^{1/2}$ or more, or may be 28 MPa$^{1/2}$ or less, 26 MPa$^{1/2}$ or less, 24 MPa$^{1/2}$ or less, 22 MPa$^{1/2}$ or less, 20 MPa$^{1/2}$ or less, or 18 MPa$^{1/2}$ or less. The solubility parameter of such a binder is a value known as a so-called Hansen Solubility Parameter, which may be confirmed through the literatures (e.g., Yanlong Luo et al., 2017, J. Phys. Chem. C 2017, 121, 10163-10173, DOI: 10.1021/acs.jpcc.7b01583, etc.). For example, in the above-mentioned types of binders, a type having such a solubility parameter may be selected.

A particulate binder may be used as the binder, and for example, the use of the particulate binder having the above-described average particle diameter.

The content of the binder in the slurry may be controlled in consideration of the desired dispersion state. For example, the binder may be included in the slurry so that the concentration of the binder relative to the solvent (=100XB/(B+S), where B is the weight (g) of the binder in the slurry, and S is the weight (g) of the solvent in the slurry.) is about 0.1 to 10% or so. In another example, the concentration may be 0.5% or more, 1% or more, 1.5% or more, or 2% or more, or may also be 9% or less, 8% or less, 7% or less, 6% or less, 5% or less, 4% or less, 3% or less, or 2.5% or less or so.

The slurry may comprise the electrode active material in addition to the above components. As the electrode active material, an appropriate type may be selected from the above-described types, and in consideration of the contribution to the desired dispersion state, an electrode active material in the form of particles, which has the above-described average particle diameter (D50 particle diameter), may be used.

The ratio of the electrode active material in the slurry may be adjusted so that the ratio of the electrode active material in the active material layer may be achieved.

In addition to the above components, the slurry may also comprise other components including the above-described conductive material, thickener, and the like, depending on the purpose.

Such a slurry may be applied on the surface of the current collector. In this process, the coating method is not particularly limited, and a known coating method, for example, a method such as spin coating, comma coating, or bar coating may be applied.

The surface characteristics of the current collector to which the slurry is applied may be controlled. For example, the surface of the current collector to which the slurry is applied may have a water contact angle of 15 degrees or less. In another example, the water contact angle may be further controlled in the range of 14 degrees or less, 13 degrees or less, 12 degrees or less, 11 degrees or less, 10 degrees or less, 9 degrees or less, 8 degrees or less, 7 degrees or less, or 6 degrees or less and/or in the range of 1 degree or more, 2 degrees or more, 3 degrees or more, 4 degrees or more, 5 degrees or more, 6 degrees or more, 7 degrees or more, 8 degrees or more, 9 degrees or more, or 10 degrees or more or so.

Among the above-described current collectors, a current collector exhibiting the water contact angle may be selected, but the current collector generally exhibits a water contact angle higher than the above-described range, so that additional treatment for controlling the water contact angle of the current collector if necessary, may also be performed.

At this time, the kind of the applied treatment is not particularly limited. Various treatment methods capable of controlling the water contact angle of the current collector surface are known in the industry.

As the suitable treatment method, a so-called atmospheric pressure plasma method may be exemplified. As is known, the plasma is a state in which electrons and ions formed by applying energy to a gas exist, and the water contact angle of the surface of the current collector may be controlled by exposure to the plasma.

For control of the appropriate water contact angle, for example, the plasma treatment may be performed by exposing the current collector to plasma generated by applying a voltage while injecting air or oxygen together with an inert gas into the processing space. At this time, the type of the applicable inert gas is not particularly limited, but may be exemplified by, for example, nitrogen gas, argon gas and/or helium gas, and the like.

The air or oxygen may be injected, for example, at a flow rate of about 0.01 to 2 LPM. The injection flow rate may also be adjusted in the range of 0.05 LPM or more, 0.1 LPM or more, 0.15 LPM or more, 0.2 LPM or more, 0.25 LPM or more, 0.3 LPM or more, 0.35 LPM or more, 0.4 LPM or more, 0.45 LPM or more, 0.5 LPM or more, or 0.55 LPM or more, and/or in the range of 1.5LPM or less, 1LPM or less, 0.9LPM or less, 0.8LPM or less, 0.7LPM or less, or 0.65 LPM or less.

In addition, the inert gas may be injected, for example, at a flow rate of about 200 to 400 LPM. The injection flow rate may also be adjusted in the range of 220 LPM or more, 240 LPM or more, 260 LPM or more, 280 LPM or more, or 290 LPM or more and/or in the range of 380 LPM or less, 360 LPM or less, 340 LPM or less, 320 LPM or less, or 310 LPM or less.

In addition, the ratio (N/O) of the injection flow rate (N) of the inert gas to the injection flow rate (O) of the air or oxygen at the time of the treatment may be, for example, in the range of about 400 to 600. The ratio (N/O) may also be adjusted in the range of 420 or more, 440 or more, 460 or more, 480 or more, or 490 or more and/or in the range of 580 or less, 560 or less, 540 or less, 520 or less, or 510 or less.

The injection flow rate of air (or oxygen) and inert gas affects the partial pressure of each gas in the processing space, and thus determines the state of the generated plasma. In the present application, it is possible to efficiently generate plasma capable of securing a desired water contact angle by controlling the injection flow rate at the same level as described above.

In a suitable example, only the air (and/or oxygen) and the inert gas may be injected into the processing space during the plasma treatment.

In a suitable example, the plasma may be generated by applying a voltage of about 5 to 20 kV The applied voltage may determine the state of the plasma through control of the degree of ionization, and through application of the voltage in the above range, it is possible to efficiently generate plasma of a desired level. In another example, the applied voltage for generating the plasma may also be further controlled in the range of 5.5 kV or more, 6 kV or more, 6.5 kV or more, 7 kV or more, or 7.5 kV or more and/or in the range of 19 kV or less, 18 kV or less, 17 kV or less, 16 kV or less, 15 kV or less, 14 kV or less, 13 kV or less, 12 kV or less, 11 kV or less, 10 kV or less, or 9 kV or less.

The applied voltage may be adjusted such that the power (unit: $W/cm^2$) per unit area is about 0.5 to 20 based on the area of the electrode for plasma generation. The power per unit area may be about 1 or more, 1.5 or more, 2 or more, 2.5 or more, 3 or more, 3.5 or more, 4 or more, 4.5 or more, 5 or more, 5.5 or more, 6 or more, 6.5 or more, 7 or more, 7.5 or more, 8 or more, 8.5 or more, or 9 or more, or may also be 18 or less, 16 or less, 14 or less, 12 or less, 10 or less, 8 or less, 6 or less, 4 or less, or 2 or less or so.

In addition, the exposure time of the current collector to the plasma at the time of the plasma treatment may be controlled to about 1 second to about 6 seconds or so. If it is exposed to the above-mentioned plasma within such an exposure time range, it is possible to effectively achieve the desired level of water contact angle.

When the plasma treatment is performed in a continuous process such as a roll-to-roll process, the exposure time may be controlled by adjusting the moving speed of the current collector. For example, when the plasma treatment is performed while moving the current collector into the processing space at a constant speed, the moving speed of the current collector may be controlled within a range of, for example, about 5 to 100 mm/sec. In another example, the moving speed may be further adjusted in the range of about 7 mm/sec or more, 9 mm/sec or more, 15 mm/sec or more, 20 mm/sec or more, 25 mm/sec or more, 30 mm/sec or more, 35 mm/sec or more, 40 mm/sec or more, or 45 mm/sec or more and/or in the range of 95 mm/sec or less, 90 mm/sec or less, 85 mm/sec or less, 80 mm/sec or less, 75 mm/sec or less, 70 mm/sec or less or less, 65 mm/sec or less, 60 mm/sec or less, 55 mm/sec or less, 50 mm/sec or less, 45 mm/sec or less, 40 mm/sec or less, 35 mm/sec or less, 30 mm/sec or less, 25 mm/sec or less, 20 mm/sec or less, 15 mm/sec or less, or 13 mm/sec or less.

By controlling the moving speed of the current collector within the above range, the desired exposure time can be achieved.

After the slurry is applied to the current collector surface whose water contact angle is controlled through the plasma treatment or the like, a drying process of the slurry may be performed. Conditions under which the drying process is performed are not particularly limited, but it may be appropriate to adjust the drying temperature within the range of about 150°C to 400°C in consideration of the formation of the desired network region and/or blank region. In another example, the drying temperature may be about 170°C or more, 190°C or more, 210°C or more, or 225°C or more or so, or may also be 380°C or less, 360°C or less, 340°C or less, 320°C or less, 300°C or less, 280°C or less, 260°C or less, or 240°C or less or so.

The drying time may also be controlled in consideration of the dispersion state considering the formation of the desired network region and/or blank region, and for example, it may be adjusted within the range of about 10 seconds to 200 seconds. In another example, the time may also be further controlled within the range of 20 seconds or more, 30 seconds or more, 40 seconds or more, 50 seconds or more, 60 seconds or more, 70 seconds or more, 80 seconds or more, or 85 seconds or more and/or within the range of 190 seconds or less, 180 seconds or less, 170 seconds or less, 160 seconds or less, 150 seconds or less, 140 seconds or less, 130 seconds or less, 120 seconds or less, 110 seconds or less, 100 seconds or less, or 95 seconds or less.

Following the drying process, a rolling process may be performed. In this case, the formation state of the network region and/or the blank region may be adjusted even by the rolling conditions (e.g., pressure during rolling, etc.).

For example, the rolling may be performed so that the porosity of the rolled slurry (active material layer) is about 35% or less or so. The desired network region and/or blank region may be effectively formed by a pressure or the like applied upon rolling performed to have such a porosity. In another example, the porosity may also be further controlled in the range of 33% or less, 31% or less, 29% or less, or 27% or less and/or in the range of 5% or more, 7% or more, 9% or more, 11% or more, 13% or more, 15% or more, 17% or more, 19% or more, 21% or more, 23% or more, or 25% or more.

The thickness of the rolled slurry (i.e., the active material layer) is within the thickness range of the active material layer as described above.

During the manufacturing process of the electrode of the present application, necessary additional processes (e.g., cutting process, etc.) may also be performed in addition to the slurry coating, drying, and rolling.

The present application also relates to an electrochemical element comprising such an electrode, for example, a secondary battery.

The electrochemical element may comprise the electrode as a positive electrode and/or a negative electrode. As long as the electrode of the present application is used as the negative electrode and/or the positive electrode, other configurations or manufacturing methods of the electrochemical element are not particularly limited, and a known method may be applied.

**Advantageous Effects**

The present application is an electrode comprising a current collector and an active material layer, which can provide an electrode capable of securing a high level of interparticle adhesion force and adhesion force between the active material layer and the current collector relative to the binder content in the active material layer.

**Description of Drawings**

Figure 1 is a cross-sectional diagram of an exemplary electrode of the present application.

Figure 2 is a conceptual diagram of a formation state of an active material layer in the prior art.

Figure 3 is a conceptual diagram of a formation state of an active material layer in the present application.

Figure 4 is a conceptual diagram of a state where a standard peel test is performed.

Figure 5 is an FE-SEM image of the current collector surface of Example 1.

Figure 6 is an FE-SEM image of the current collector surface of Example 2.

Figure 7 is an FE-SEM image of the current collector surface of Comparative Example 1.

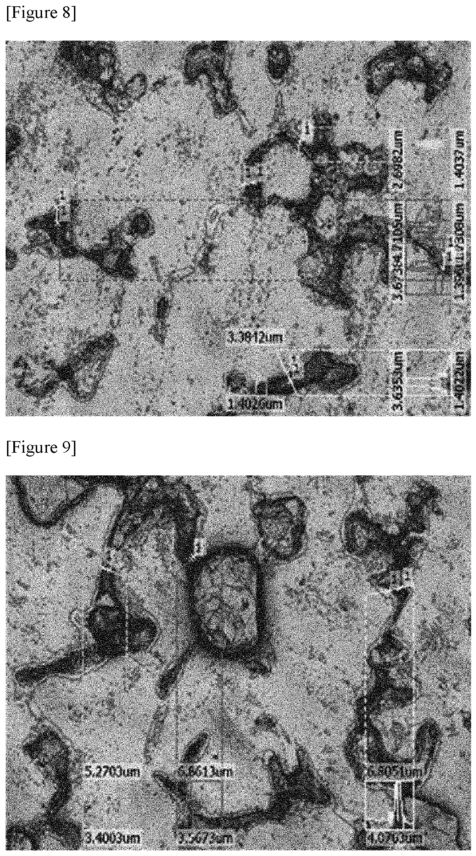

Figure 8 is a confocal laser spectro microscope image of the current collector surface of Example 1.

Figure 9 is a confocal laser spectro microscope image of the current collector surface of Example 2.

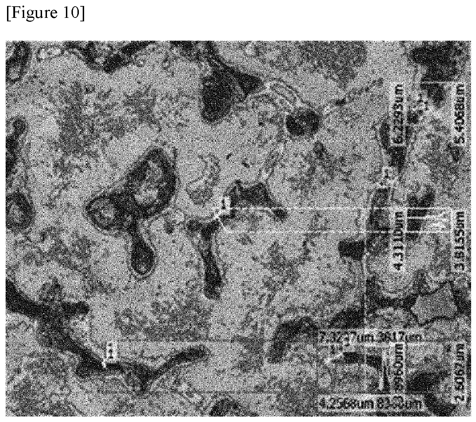

Figure 10 is a confocal laser spectro microscope image of the current collector surface of Comparative Example 1.

[Explanation of Reference Numerals]

100: current collector

200: active material layer

300: Scotch Magic tape

1001: electrode active material

2001: binder

**Mode for Invention**

Hereinafter, the present application will be described in more detail through Examples and Comparative Examples, but the scope of the present application is not limited to the following Examples.

**1. Measurement of water contact angle**

The water contact angle was measured by a tangent angle method by dropping 3 $\mu$l drops at a rate of 3$\mu$l/s using KRUSS' drop shape analyzer device (manufacturer: KRUSS, trade name: DSA100). Water and DM (diiodomethane) were dropped in the same way, and the surface energy was calculated by an OWRK (Owens-Wendt-Rabel-Kaelble) method.

**2. Standard peel test**

The standard peel test was performed using 3M's Scotch Magic tape Cat. 810R. The electrodes prepared in Examples or Comparative Examples were each cut to a size of 20mm or so in width and 100mm or so in length to obtain a sample. On the active material layer of the obtained sample, the Scotch Magic tape Cat. 810R was attached by reciprocating and pushing a roller having a weight of 1kg, a radius of 50mm, and a width of 40mm once. At this time, the Scotch Magic tape was cut to have a width of 10mm or so and a length of 60mm or so, and used, and as shown in Figure 4, the Scotch Magic tape and the electrode active material layer were attached to be crossed to a length of about 20mm or so, and the protruding part was held and peeled off. At this time, the peel rate and the peel angle were set to a speed of about 20mm/sec or so and an angle of about 30 degrees or so. A new scotch tape was replaced and used every time it was peeled off. The above process was repeated until the components of the active material layer did not come out on the surface of the Scotch Magic tape. It was visually observed whether or not the components of the active material layer came out, and when the tone did not substantially change compared to the unused tape, it was determined that the components of the active material layer did not come out.

**3. Confirmation of network region and blank region**

After the standard peel test, a network region and a blank region were confirmed on the current collector surface. After the standard peel test, the surface of the current collector was photographed at a magnification of 500 times with an FE-SEM (field emission scanning electron microscope) device (manufacturer: HITACHI, trade name: S4800) to obtain an image. By using the Trainable Weka Segmentation Plug-in of Image J software (manufacturer: Image J), the region in which the network region was formed and the part (blank region) where the network region was not formed were divided, the network region was separated, and the relevant area was measured. In the above process, regarding the division of the network region and the blank region, based on the brightness, the parts satisfying the parts where the brightness was 80 or less, and the parts where the brightness was 160 or more due to the height within the closed curve consisting of the relevant parts were defined as the network region, and the other regions were defined as the blank region.

**4. Height measurement of network region**

After the standard peel test, the surface of the current collector was observed with a confocal laser spectro microscope (manufacturer: Keyenece, product name: VK-X200) to obtain 5 or more images at a magnification of 3000 times, and the heights of the network region at 3 sites or more for each image and a total of 20 sites or more were measured, whereby the arithmetic mean was designated as the height of the network region.

**5. Confirmation of average particle diameter (D50 particle diameter) of particulate binder and electrode active material**

The average particle diameters (D50 particle diameters) of the particulate binder and the electrode active material were measured with Marvern's MASTERSIZER3000 equipment in accordance with ISO-13320 standard. Upon the measurement, water was used as a solvent. When a particulate binder or the like is dispersed in the solvent and irradiated with lasers, the lasers are scattered by the binder dispersed in the solvent, and the intensities and directionality values of the scattered lasers vary depending on the size of the particles, so that it is possible to obtain the average diameter by analyzing these with the Mie theory. Through the above analysis, a volume-based cumulative graph of the particle size distribution was obtained through conversion to the diameters of spheres having the same volume as that of the dispersed binder, and the particle diameter (median diameter) at 50% cumulative of the graph was designated as the average particle diameter (D50 particle diameter).

**5. Measurement of adhesion force**

After rolling, the electrode was cut to have a width of 20mm or so, and the adhesion force was measured according to a known method for measuring the adhesion force of the active material layer. Upon measuring the adhesion force, the peel angle was 90 degrees, and the peel rate was 5 mm/sec or so. After the measurement, the portions where the peaks were stabilized were averaged and defined as the adhesion force.

**Example 1.**

A copper foil (Cu foil) was used as a current collector, and after adjusting the water contact angle of the surface by atmospheric pressure plasma treatment as follows, it was applied to the manufacture of the electrode.

The atmospheric pressure plasma treatment was performed by exposing the current collector to the plasma generated by applying a voltage of 8kV while injecting nitrogen (N2) into the chamber at a flow rate of 300 LPM, and injecting air at a flow rate of 0.6 LPM.

The plasma treatment was performed while transferring the copper foil at a speed of about 50 mm/sec.

After the above operation, the water contact angle of the current collector surface was measured in the above-described manner. As a result of confirmation, the water contact angle at the center of the current collector was about 10.20 degrees, the water contact angle at the right edge portion was about 10.60 degrees, and the water contact angle at the left edge portion was about 10.15 degrees. The arithmetic average of the water contact angles at the three regions, about 10.32 degrees, was used as the water contact angle of the current collector.

As a slurry, a slurry comprising water, an SBR (styrene-butadiene rubber) binder, a thickener (CMC, carboxymethyl cellulose) and an electrode active material (1) (artificial graphite (GT), average particle diameter (D50 particle diameter): 20 $\mu$m), and an electrode active material (2) (natural graphite (PAS), average particle diameter (D50 particle diameter): 15 $\mu$m) in a weight ratio of 48.5:1:0.5:45:5 (water: SBR: CMC: active material (1): active material (2)) was used.

The water is a solvent having a dipole moment of about 1.84 D or so, and the SBR binder is a binder having a solubility parameter of about 16.9 MPa$^{1/2}$ or so. The solubility parameter of the SBR binder is the value described in the literature (Yanlong Luo et al., 2017, J. Phys. Chem. C 2017, 121, 10163-10173, DOI: 10.1021/acs.jpcc.7b01583). In addition, the SBR binder was a particulate binder, which had an average particle diameter (D50 particle diameter, median particle diameter) of about 150 nm or so.

The slurry was applied to a thickness of about 280 $\mu$m or so on the surface of the current collector having a water contact angle of about 10.32 degrees by a gap coating method, and dried at a temperature of about 230°C for about 90 seconds. After drying, an electrode having a thickness of about 180 $\mu$m or so was obtained, and the dried slurry layer was rolled with a conventional electrode rolling mill to have a final thickness of about 110 $\mu$m or so and a porosity of about 26% or so, thereby forming an active material layer.

The porosity of the active material layer is a value calculated by a method of comparing the ratio of the difference between the real density and the density after rolling. In addition, when considering the compositions of the slurry, the content of the SBR binder in the active material layer of the electrode is about 1.94 weight% or so, and the content of the electrode active material is about 97 weight% or so.

**Example 2.**

An electrode was manufactured in the same manner as in Example 1, except that the moving speed of the copper foil was controlled to about 10 mm/sec or so upon the plasma treatment.

As a result of measuring the water contact angle of the current collector surface after the plasma treatment in the manner described above, the water contact angle at the center of the current collector was about 5.10 degrees, the water contact angle at the right edge portion was about 6.16 degrees, and the water contact angle at the left edge portion was about 4.25 degrees. The arithmetic average of the water contact angles at the three regions, about 5.17 degrees, was used as the water contact angle of the current collector.

The composition of the slurry used for manufacturing the electrode, the coating method, the drying conditions, and the rolling method, and the like are the same as in Example 1.

**Comparative Example 1.**

An electrode was manufactured in the same manner as in Example 1, except that a copper foil without plasma treatment was used.

As a result of measuring the water contact angle of the copper foil in the manner described above, the water contact angle at the center of the current collector was about 15.14 degrees, the water contact angle at the right edge portion was about 16.62 degrees, and the water contact angle at the left edge portion was about 15.74 degrees. The arithmetic average of the water contact angles at the three regions, about 15.83 degrees, was used as the water contact angle of the current collector.

The composition of the slurry used for manufacturing the electrode, the coating method, the drying conditions, and the rolling method, and the like are the same as in Example 1.

**Test Example 1. Confirmation of network region and blank region**

A standard peel test was performed on the electrodes of Examples 1 and 2 and Comparative Example 1 in the above manner, and the network region and the blank region were confirmed on the current collector surface.

Figures 2 to 4 are FE-SEM (field emission scanning electron microscope) images of Example 1, Example 2, and Comparative Example 1, respectively.

As a result of confirmation, the occupied area of the network region of Example 1 was about 34.3%, the occupied area of the network region of Example 2 was about 47.7%, and the occupied area of the network region of Comparative Example 1 was about 65% or so, relative to the total area of the current collector surface.

Here, the occupied area of the network region is a ratio $(100 \times A2/A1)$ of the occupied area $(A2)$ of the network region based on the total area $(A1)$ of the current collector surface.

In addition, the occupied area of the blank region of Example 1 was about 65%, the occupied area of the blank region of Example 2 was about 52%, and the occupied area of the blank region of Comparative Example 1 was about 33 % or so, relative to the total area of the current collector surface.

Here, the occupied area of the blank region is a ratio $(100 \times A3/A1)$ of the occupied area $(A3)$ of the blank region based on the total area $(A1)$ of the current collector surface.

**Test Example 2. Confirmation of height and adhesion force of network region**

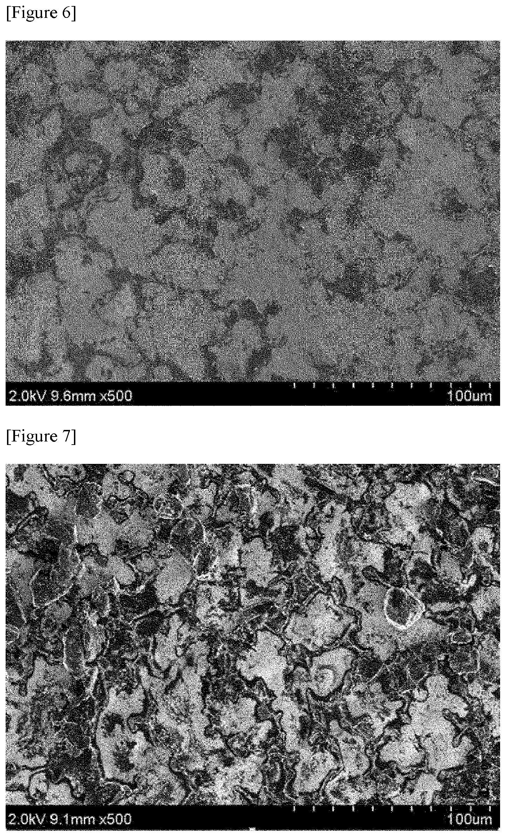

After the standard peel test, the height of the network region on the surface of the current collector was measured. Figures 5 to 7 are confocal laser spectro microscope images of Examples 1 and 2, and Comparative Example 1, respectively.

The height of the network region and the adhesion force of the active material layer in each case were summarized and described in Table 1 below.

[Table 1]

|  | Example 1 | Example 2 | Comparative Example 1 |
|---|---|---|---|
| Height of network region ($\mu$m) | 1.6 | 2.16 | 1.21 |
| Adhesion force (gf/20mm) | 31.6 | 34.7 | 28 |

From Table 1, it can be confirmed that after the standard peel test, the higher the height of the network region, the higher the adhesion force is secured, while the occupied area of the network region is in a certain level.

**Claims**

1. An electrode, comprising:

    a current collector; and
    an active material layer on one side of the current collector,
    wherein the active material layer comprises an electrode active material and a particulate binder,
    wherein, after the following standard peel test, a network region is identified on the current collector surface,
    wherein the network region is a region comprising the particulate binder and having a height of three times or more an average particle diameter of the particulate binder and
    wherein the standard peel test is a test repeating a process to attach a scotch magic tape Cat. 810R on the active material layer and then peel off the scotch magic tape Cat. 810R until no component of the active material layer is observed on the scotch magic tape Cat. 810R.

2. An electrode, comprising:

    a current collector; and
    an active material layer on one side of the current collector,
    wherein the active material layer comprises an electrode active material and a particulate binder,
    wherein, after the following standard peel test, a blank region is identified on the current collector surface,
    wherein the blank region is a region comprising the particulate binder and having a height of 1.5 times or less an average particle diameter of the particulate binder, or a region not comprising the particulate binder, and
    wherein the standard peel test is a test repeating a process to attach a scotch magic tape Cat. 810R on the active material layer and then peel off the scotch magic tape Cat. 810R until no component of the active material layer is observed on the scotch magic tape Cat. 810R.

3. An electrode, comprising:

a current collector; and
an active material layer on one side of the current collector,
wherein the active material layer comprises an electrode active material and a particulate binder,
wherein, after the following standard peel test, a network region and a blank region are identified on the current collector surface,
wherein the network region is a region comprising the particulate binder and having a height of 3 times or more an average particle diameter of the particulate binder,
wherein the blank region is a region comprising the particulate binder and having a height of 1.5 times or less the average particle diameter of the particulate binder, or a region not comprising the particulate binder, and
wherein the standard peel test is a test repeating a process to attach a scotch magic tape Cat. 810R on the active material layer and then peel off the scotch magic tape Cat. 810R until no component of the active material layer is observed on the scotch magic tape Cat. 810R.

4. The electrode according to claim 1 or 3, wherein a ratio of an occupied area by the network region in the current collector surface is 60% or less.

5. The electrode according to claim 1, wherein an occupied area by the network region satisfies Equation 1 below:

$$[\text{Equation 1}]$$

$$A/W \leq 30$$

wherein, A is a ratio (unit: %) of the occupied area by the network region relative to the total area of the current collector surface, and W is a content (weight%) of the binder in the active material layer.

6. The electrode according to claim 2 or 3, wherein a ratio of an occupied area by the blank region in the current collector surface is 40% or more.

7. The electrode according to any one of claims 1 to 3, wherein the current collector is a film, sheet or foil comprising one or more selected from the group consisting of stainless steel, aluminum, nickel, titanium, baked carbon, copper, carbon, stainless steel surface-treated with nickel, titanium or silver, and an aluminum-cadmium alloy.

8. The electrode according to any one of claims 1 to 3, wherein the binder comprises one or more selected from the group consisting of PVDF (poly(vinylidene fluoride)), PVA (poly(vinyl alcohol)), polyvinylpyrrolidone, tetrafluoroethylene, polyethylene, polypropylene, an ethylene-propylene-diene terpolymer (EPDM), a sulfonated EPDM, SBR (styrene-butadiene rubber), and fluororubber.

9. The electrode according to any one of claims 1 to 3, wherein the average particle diameter of the particulate binder is in a range of 50 nm to 500 nm.

10. The electrode according to any one of claims 1 to 3, wherein the height of the network region is 1.4 $\mu$m or more.

11. The electrode according to any one of claims 1 to 3, wherein a content of the binder in the active material layer is in a range of 0.5 to 10 weight%.

12. The electrode according to any one of claims 1 to 3, wherein the electrode active material is a particulate material.

13. The electrode according to claim 12, wherein a ratio (D1/D2) of an average particle diameter (D1) of the electrode active material relative to an average particle diameter (D2) of the particulate binder is in a range of 10 to 1,000.

14. An electrochemical element, comprising:
the electrode of any one of claims 1 to 3 as a negative electrode or a positive electrode.

15. A secondary battery, comprising:
the electrode of any one of claims 1 to 3 as a negative electrode or a positive electrode.

[Figure 1]

| 200 |
|-----|
| 100 |

[Figure 2]

[Figure 3]

[Figure 4]

[Figure 5]

2.0kV 9.2mm x500                                      100um

[Figure 6]

2.0kV 9.6mm x500                    100um

[Figure 7]

2.0kV 9.1mm x500                    100um

[Figure 8]

[Figure 9]

[Figure 10]

<table>
<tr><td colspan="2" align="center">**INTERNATIONAL SEARCH REPORT**</td><td colspan="2">International application No.<br><br>**PCT/KR2021/013154**</td></tr>
</table>

**A.    CLASSIFICATION OF SUBJECT MATTER**

**H01M 4/13**(2010.01)i; **H01M 4/62**(2006.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/13(2010.01); H01M 10/058(2010.01); H01M 10/36(2006.01); H01M 4/02(2006.01); H01M 4/04(2006.01); H01M 4/139(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 전류 집전체(current collector), 전극 활물질층(electrode active material layer), 바인더(binder), 접착력(adhesion), 플라즈마 처리(plasma treatment)

**C.    DOCUMENTS CONSIDERED TO BE RELEVANT**

| Category* | Citation of document, with indication, where appropriate, of the relevant passages | Relevant to claim No. |
|---|---|---|
| X<br><br>Y | JP 5522487 B2 (TOYOTA MOTOR CORP.) 18 June 2014 (2014-06-18)<br>    See paragraphs [0020]-[0023], [0025], [0026], [0036], [0046], [0050], [0058] and [0080]-[0090]; and figures 1 and 5. | 1-8,10-15<br><br>9 |
| Y | KR 10-0729118 B1 (LG CHEM, LTD.) 14 June 2007 (2007-06-14)<br>    See paragraph [0029]. | 9 |
| X | KR 10-2016-0033482 A (LG CHEM, LTD.) 28 March 2016 (2016-03-28)<br>    See paragraphs [0029], [0054]-[0056], [0059] and [0062] and example 1. | 1-8,10-15 |
| A | US 2009-0098457 A1 (KWON, M.-S. et al.) 16 April 2009 (2009-04-16)<br>    See entire document. | 1-15 |
| A | JP 2018-073645 A (TOYOTA MOTOR CORP.) 10 May 2018 (2018-05-10)<br>    See entire document. | 1-15 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **20 January 2022** | **20 January 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
**Information on patent family members**

International application No.

**PCT/KR2021/013154**

| Patent document cited in search report | | | Publication date (day/month/year) | Patent family member(s) | | | Publication date (day/month/year) |
|---|---|---|---|---|---|---|---|
| JP | 5522487 | B2 | 18 June 2014 | CN | 102106020 | A | 22 June 2011 |
| | | | | CN | 102106020 | B | 09 October 2013 |
| | | | | CN | 102272982 | A | 07 December 2011 |
| | | | | CN | 102272982 | B | 11 June 2014 |
| | | | | EP | 2330663 | A1 | 08 June 2011 |
| | | | | EP | 2330663 | B1 | 26 September 2018 |
| | | | | EP | 2461396 | A1 | 06 June 2012 |
| | | | | EP | 2461396 | B1 | 06 May 2020 |
| | | | | JP | 5445871 | B2 | 19 March 2014 |
| | | | | US | 2012-0115027 | A1 | 10 May 2012 |
| | | | | US | 2012-0135304 | A1 | 31 May 2012 |
| | | | | US | 8343656 | B2 | 01 January 2013 |
| | | | | US | 9159986 | B2 | 13 October 2015 |
| | | | | WO | 2011-013413 | A1 | 03 February 2011 |
| | | | | WO | 2011-013414 | A1 | 03 February 2011 |
| KR | 10-0729118 | B1 | 14 June 2007 | CN | 100583514 | C | 20 January 2010 |
| | | | | CN | 101180755 | A | 14 May 2008 |
| | | | | JP | 2008-546135 | A | 18 December 2008 |
| | | | | JP | 5110599 | B2 | 26 December 2012 |
| | | | | KR | 10-2006-0119797 | A | 24 November 2006 |
| | | | | US | 2006-0275661 | A1 | 07 December 2006 |
| | | | | US | 7935442 | B2 | 03 May 2011 |
| | | | | WO | 2006-123892 | A1 | 23 November 2006 |
| | | | | WO | 2006-123892 | A9 | 25 June 2009 |
| KR | 10-2016-0033482 | A | 28 March 2016 | None | | | |
| US | 2009-0098457 | A1 | 16 April 2009 | KR | 10-2009-0038309 | A | 20 April 2009 |
| JP | 2018-073645 | A | 10 May 2018 | JP | 6766596 | B2 | 14 October 2020 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YANLONG LUO et al.** *J. Phys. Chem. C,* 2017, vol. 121, 10163-10173